# DEMANDE DE BREVET EUROPEEN

(11) **EP 1 405 872 A1**
(43) Date de publication de la demande: **07.04.2004**
(21) Numéro de dépôt: 03292335.1
(22) Date de dépôt: 24.09.2003
(51) Int. Cl.: C08J 5/12, C09J 7/02, B32B 27/08

(54) **Utilisation d'un film à base de PVDF, de PMMA ou leur mélange pour recouvrir des objets en matériau thermodur**

(30) Priorité: 03.10.2002 FR 0212263
(71) Demandeur: Atofina, 92800 Puteaux (FR)
(72) Inventeur: Bonnet, Anthony, 27170 Beaumont le Roger (FR); Bussy, Philippe, 76000 Rouen (FR); Silagy, David, 27000 Evreux (FR)
(74) Mandataire: Neel, Henry

(57) **Abrégé**

La présente invention concerne l'utilisation de films constitués d'une couche adhésive et d'une couche (A) pour revêtir des objets en matériau thermodur : la couche adhésive comprenant , en poids : 0 à 60 parties de PVDF, 10 à 100 parties de PMMA fonctionnalisé, 0 à 50 parties d'un élastomère acrylique, 0 à 4 parties d'un absorbeur UV, le total faisant 100 parties, la couche (A) comprenant comme constituants principaux 0 à 100 parties de PVDF pour respectivement 100 à 0 parties de PMMA.

Ce film peut être fabriqué par coextrusion puis est ensuite fixé sur le matériau thermodur par exemple par pressage à chaud. On peut aussi disposer le film dans un moule, la couche (A) étant disposée contre la paroi du moule, puis injecter le précurseur du matériau thermodur dans le moule (cad du coté de la couche adhésive) et ensuite provoquer la réticulation pour obtenir un matériau thermodur revêtu de la couche (A).

L'invention concerne aussi une structure multicouche SMC (abréviation de Sheet Moulding Compound ou composition de moulage en feuille) comprenant dans cet ordre: un film support, une composition réticulable (le précurseur du matériau thermodur), la couche adhésive précédente et la couche (A) précédente.

La structure SMC est découpée à la demande, on pèle le film support, on la dispose dans un moule puis on provoque la réticulation pour obtenir un objet en matériau thermodur recouvert d'un film de la couche (A).

## Description

### [Domaine de l'invention]

Le PVDF (polyfluorure de vinylidène) en raison de sa très bonne résistance aux intempéries, au rayonnement et aux produits chimiques est utilisé pour protéger des objets ou des matériaux. De plus il est apprécié pour son aspect brillant et sa résistance aux graffitis. On est donc amené à revêtir toutes sortes de substrats et en particulier des matériaux thermodurs avec un film de PVDF. Cependant le PVDF adhère très mal sur les matériaux thermodurs, il est donc nécessaire de disposer une composition adhésive entre le PVDF et le matériau thermodur. Cette composition est coextrudée avec le PVDF pour former un film bicouche puis ce film est ensuite fixé sur le matériau thermodur par exemple par pressage à chaud. On peut aussi disposer le film bicouche dans un moule, la couche de PVDF étant disposée contre la paroi du moule, puis injecter le précurseur du matériau thermodur dans le moule et ensuite provoquer la réticulation pour obtenir un matériau thermodur revêtu de PVDF. Le PVDF peut être aussi un mélange de PVDF et de PMMA. Pour des applications dans des conditions moins agressives on peut n'utiliser que du PMMA.

### [L'art antérieur et le problème technique]

Le brevet **US 4581412** décrit des compositions réticulables qui sont des copolymères de monomères fluorés et de monomères fonctionnalisés. Elles sont appliquées en émulsion aqueuses ou dans des solvants sur des substrats puis réticulées.

La demande de brevet **JP 52-87231 A** décrit un revêtement similaire mais appliqué sur un matériau non encore réticulé.

Les revêtements obtenus ont de bonnes propriétés dues à la présence de monomères fluorés mais ils sont du type peinture ou vernis et n'ont rien à voir un film en PVDF qu'on colle sur un substrat. En particulier ces revêtements ont une tenue aux intempéries inférieure à celle des films en PVDF collés sur un substrat.

Le brevet **US 4364886** décrit un substrat en ABS ou en matériau thermodur à base de polyester insaturé recouvert par un film de PVDF, un adhésif est disposé entre le PVDF et le substrat. Cet adhésif est soit du PMMA soit un mélange en poids de 30% de PMMA, de 40% d'un élastomère acrylique, de 25% d'ABS et de 5% d'un mélange d'oxyde de zinc et de sulfure de zinc.

La demande de brevet **JP 52-20907 A** décrit une structure comprenant dans cet ordre une couche de résine non réticulée mélangée avec des fibres de verre, une feuille en fibres de verre ou en fibres de polyester puis une couche constituée d'une résine en ester acrylique ou en fluorure de vinylidène.

Ces structures ne présentent pas une adhérence suffisante de la couche de PVDF. On a maintenant trouvé qu'on pouvait revêtir des substrats en matériau thermodur avec un film de PVDF, de PMMA ou d'un mélange de PVDF et de PMMA à condition de disposer entre ce film et le substrat une couche à base de PMMA fonctionnalisé. On a aussi découvert que ces films pouvaient être utilisés dans la technique SMC (le terme est décrit plus loin).

Le brevet **US 5242976** décrit une composition coextrudable avec le PVDF pour le faire adhérer sur des substrats qui peuvent être du polyester. La composition est un mélange en poids de 27 à 50% de PMMA, de 17,5 à 36,5% de PVDF et de 25 à 47,45% d'un élastomère acrylique. Le PMMA peut contenir un monomère choisi parmi le styrène, l'alpha méthylstyrène, l'acrylonitrile et l'acide (meth)acrylique. On a maintenant trouvé que pour qu'il y ait adhérence sur le matériau thermodur le PMMA doit être fonctionnalisé.

### [Brève description de l'invention]

La présente invention concerne l'utilisation de films constitués d'une couche adhésive et d'une couche (A) pour revêtir des objets en matériau thermodur :
la couche adhésive comprenant, en poids :
   0 à 60 parties de PVDF,
   10 à 100 parties de PMMA fonctionnalisé,
   0 à 50 parties d'un élastomère acrylique,
   0 à 4 parties d'un absorbeur UV,
   le total faisant 100 parties,
la couche (A) comprenant comme constituants principaux 0 à 100 parties de PVDF pour respectivement 100 à 0 parties de PMMA.

Selon une variante la couche adhésive peut être constituée de 2 couches adjacentes, l'une comme celle décrite ci dessus et l'autre essentiellement constituée de PMMA fonctionnalisé et éventuellement d'un élastomère acrylique et disposée à l'opposé de la couche (A). C'est à dire qu'on a dans l'ordre: la couche essentiellement constituée de PMMA fonctionnalisé et éventuellement d'un élastomère acrylique, la couche adhésive précédente (PMMA fonctionnalisé, PVDF éventuel, élastomère acrylique éventuel et absorbeur UV éventuel) et la couche (A).

Le film peut comprendre une couche pelable de protection disposée du coté de la couche (A), c'est à dire du coté opposé à la couche adhésive. Cette couche est pelée après fixation du film sur le matériau thermodur.

Selon une deuxième forme de l'invention la couche (A) se présente sous forme de 2 couches :
l'une disposée contre la couche adhésive et comprenant comme constituants principaux 50 à 90 parties de PVDF pour respectivement 50 à 10 parties de PMMA,
l'autre (appelée aussi couche extérieure) comprenant comme constituants principaux 75 à 100 parties de PVDF pour respectivement 25 à 0 parties de PMMA.

Ce film peut être fabriqué par coextrusion puis est ensuite fixé sur le matériau thermodur par exemple par pressage à chaud. On peut aussi disposer le film dans un moule, la couche (A) étant disposée contre la paroi du moule, puis injecter le précurseur du matériau thermodur dans le moule (cad du coté de la couche adhésive) et ensuite provoquer la réticulation pour obtenir un matériau thermodur revêtu de la couche (A).

L'invention concerne aussi les substrats revêtus de ce film, la composition adhésive étant disposée contre le substrat.

L'invention concerne aussi une structure multicouche SMC (abréviation de Sheet Moulding Compound ou composition de moulage en feuille) comprenant dans cet ordre:
un film support,
une composition réticulable (le précurseur du matériau thermodur),
une couche adhésive comprenant , en poids :
   0 à 60 parties de PVDF,
   10 à 100 parties de PMMA fonctionnalisé,
   0 à 50 parties d'un élastomère acrylique,
   0 à 4 parties d'un absorbeur UV,
   le total faisant 100 parties,
une couche (A) comprenant comme constituants principaux 0 à 100 parties de PVDF pour respectivement 100 à 0 parties de PMMA.

Comme ci dessus une couche pelable de protection peut être disposée du coté de la couche (A) et éventuellement cette couche (A) peut se présenter sous forme de 2 couches.

La structure SMC est découpée à la demande, on pèle le film support, on la dispose dans un moule puis on provoque la réticulation pour obtenir un objet en matériau thermodur recouvert d'un film de la couche (A).

Selon une deuxième forme de cette structure SMC le film support peut être remplacé par une couche adhésive et une couche (A) c'est à dire qu'on a une structure symétrique dans laquelle la composition réticulable est au centre.

Comme dans la première forme de la structure SMC ci dessus une couche pelable de protection peut être disposée du coté de l'une ou de chacune des couches (A). Comme dans la première forme de la structure SMC ci dessus une des couches (A) ou chacune des couches (A) peut se présenter sous forme de 2 couches.

La structure SMC est découpée à la demande, on la dispose dans un moule puis on provoque la réticulation pour obtenir un objet en matériau thermodur recouvert de chaque coté, ou en totalité selon sa forme, d'une couche (A).

### [Description détaillée de l'invention]

**S'agissant du matériau thermodur** il est défini comme étant formé de chaînes polymères de longueur variable liées entre elles par des liaisons covalentes de manière à former un réseau tridimensionnel. A titre d'exemple on peut citer les cyanoacrylates, les bismaleimides, les résines époxy reticulées par un durcisseur, les polyesters insaturés réticulés à l'aide d'un solvant réactif et les vinyl esters aussi réticulés à l'aide d'un solvant réactif.

Parmi les cyanoacrylates on peut citer les 2-cyanoacrylic ester qui sont des matériaux thermodurs obtenus par polymérisation du monomère CH2=C(CN)COOR avec différents groupements R possibles (sans nécessité d'ajouter un durcisseur).

Les formulations thermodures de type bismaléimide sont par exemple :
méthylènedianiline + benzophenone dianhydride + nadic imide
méthylènedianiline + benzophenone dianhydride + phenylacetylene
méthylènedianiline + anhydride maléique + maléimide.

Parmi les réseaux thermodurs (ou les matériaux thermodurs) on peut citer par exemple les réseaux résultants de la réaction d'un polyester insaturé (UPE) ou d'un vinylester (VE) avec un solvant réactif. A titre d'exemple on peut citer les réseaux résultants de la réaction de copolymérisation radicalaire entre un solvant réactif, de façon préférable le styrène ou un monomère acrylique ou un mélange de solvants réactifs et des doubles liaisons fumariques inclues dans les prépolymères polyester qui de ce fait est appelé insaturé. Ces prépolymères polyester insaturés résultent d'une polyestérification entre des diacides ou des anhydrides d'acide ou un mélange d'anhydride et d'acide dont l'un au moins est insaturé, on pourra citer en exemple l'anhydride maléique ou l'anhydride phtalique, et des polyols, on pourra citer en exemple le 1,2 propylène glycol. La copolymérisation radicalaire entre le prépolymère insaturé et le solvant réactif peut être initiée soit par des péroxydes, soit par effet catalytique en présence de sels de métaux lourds ou d'amine, soit en utilisant un couple lumière / photo amorceur, soit en utilisant des rayons ionisants ou encore une combinaison judicieuse de ces différents moyens d'amorçage.

Les matériaux thermodurs peuvent aussi résulter de la réaction d'une résine vinylester avec un solvant réactif. Ces résines vinylester proviennent de la condensation des époxydes avec des acides acryliques ou méthacrylique.

Les matériaux thermodurs peuvent aussi résulter de la réaction d'un mélange de prépolymère polyester et d'une résine vinylester avec un solvant réactif.

Les matériaux thermodurs à base d'UPE ou de VE ou d'un mélange d'UPE et de VE peuvent contenir des charges, des agents de démoulage, des renforts fibreux, des anti-UV, les additifs permettant d'améliorer la stabilité au stockage avant réticulation, ainsi que des azurants optiques ou des pigments.

Le matériau thermodur peut bien évidemment être recouvert d'un gel-coat. Ce gel-coat est une couche de résine pure permettant d'avoir un bel aspect de surface.

Ces matériaux thermodurs à base de polyester insaturé ou de résine vinylester sont décrits dans ULLMAN'S ENCYCLOPEDIA OF INDUSTRIAL CHEMISTRY, VCH Publishers, 5 ième édition, Vol A 21, pages 217-251.

S'agissant des films constitués d'une couche adhésive et d'une couche (A) **on décrit d'abord le PVDF et le PMMA de la couche (A).**

**S'agissant du PVDF** on désigne ainsi les PVDF, homopolymères du fluorure de vinylidène (VF2) et les copolymères du fluorure de vinylidène (VF2) contenant de préférence au moins 50 % en poids de VF2 et au moins un autre monomère copolymérisable avec le VF2. Avantageusement le comonomère est fluoré, il peut être choisi par exemple parmi le fluorure de vinyle; le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD). De préférence le comonomère éventuel est choisi parmi le chlorotrifluoroéthylène (CTFE), l'hexafluoropropylène (HFP), le trifluoroéthylène (VF3) et le tétrafluoroéthylène (TFE).

Avantageusement, le PVDF a une viscosité allant de 100 Pa.s à 2000 Pa.s, la viscosité étant mesurése à 230°C, à un gradient de cisaillement de 100 s⁻¹à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

**S'agissant du PMMA** on désigne ainsi les homopolymères du méthacrylate de méthyle et les copolymères contenant au moins 50% en poids de méthacrylate de méthyle. A titre d'exemple de comonomère on peut citer par exemple les (méth)acrylates d'alkyle, l'acrylonitrile, le butadiène, le styrène, l'isoprène. Des exemples de (méth)acrylates d'alkyle sont décrits dans KIRK-OTHMER, Encyclopedia of chemical technology, 4 ème édition dans le Vol 1 pages 292-293 et dans le Vol 16 pages 475-478. Avantageusement le PMMA peut contenir 0 à 20% en poids et de préférence 5 à 15% d'au moins un autre (meth)acrylate d'alkyle tel que par exemple l'acrylate de méthyle et/ou l'acrylate d'éthyle. Le PMMA peut être fonctionnalisé c'est à dire qu'il contient par exemple des fonctions acide, chlorure d'acide, alcool, anhydride et uréido. Ces fonctions peuvent être introduites par greffage ou par copolymérisation. S'agissant des fonctions acide c'est avantageusement une fonction acide apportée par le comonomère acide acrylique ou méthacrylique. Deux fonctions acide acrylique voisines peuvent se déshydrater pour former un anhydride selon la formule suivante dans laquelle m vaut 0 ou 1 :

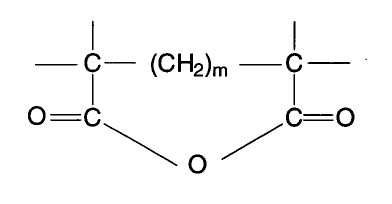

S'agissant de la fonction uréido elle peut être apportée par l'acrylate suivant:

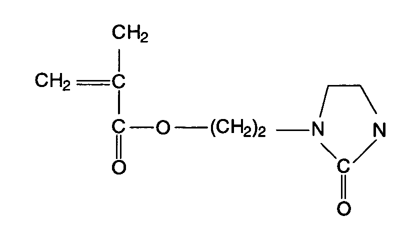

La proportion de fonctions peut être de 0 à 15% en poids du PMMA comprenant les fonctions éventuelles.

Le MVI (melt volume index ou indice de fluidité en volume à l'état fondu) du PMMA peut être compris entre 2 et 15 cm3/10 min mesuré à 230°C sous une charge de 3,8 kg.

Le PMMA peut contenir un élastomère acrylique. En effet il existe des qualités commerciales de PMMA dites "qualité choc" qui contiennent des modifiants choc acryliques le plus souvent de type coeur écorce. Ces modifiants choc acryliques peuvent aussi être présents dans le PMMA parce qu'ils ont été introduits au cours de sa polymérisation ou préparés simultanément au cours de sa polymérisation. Cette proportion d'élastomère acrylique peut être, en poids, de 0 à 30 parties pour respectivement 100 à 70 parties de PMMA. l'élastomère acrylique est décrit plus loin dans le paragraphe concernant la couche adhésive.

Avantageusement la couche (A) comprend comme constituants principaux 50 à 100 parties de PVDF pour respectivement 50 à 0 parties de PMMA, plus avantageusement la couche (A) comprend comme constituants principaux 70 à 100 parties de PVDF pour respectivement 30 à 0 parties de PMMA et de préférence 75 à 85 parties de PVDF pour respectivement 25 à 15 parties de PMMA. Cette couche peut contenir des pigments ou des colorants.

S'agissant des films constitués d'une couche adhésive et d'une couche (A) on décrit maintenant la couche adhésive. Le PVDF peut être choisi parmi ceux cités plus haut pour la couche de PVDF. Le PMMA est choisi parmi les PMMA fonctionnalisés qu'on a cités plus haut pour la couche de PVDF. Si la couche (A) est transparente, c'est à dire qu'elle ne contient pas de colorants ou de pigments, il est recommandé d'ajouter un absorbeur UV dans la couche adhésive. En effet si les objets en matériau thermodur et recouverts de la couche (A) sont exposés à la lumière du jour la couche adhésive est endommagée, elle n'est plus adhésive et la couche (A) se décolle du matériau thermodur.

**S'agissant de l'absorbeur UV** ces produits sont connus en eux mêmes. De tels produits sont cités dans le brevet US 5256472. On utilise avantageusement les benzotriazoles et les benzophénones. A titre d'exemple on peut utiliser les Tinuvin® 213 ou Tinuvin® 109 et de façon préférable le Tinuvin® 234 de la société Ciba Speciality Chemicals. Avantageusement la proportion d'absorbeur UV est de 2 à 3 parties pour 100 parties de la couche adhésive.

La couche adhésive peut contenir un **élastomère acrylique**. Sa présence améliore la qualité de l'adhésion (augmente la force de pelage) et donne une meilleure tenue mécanique aux films constitués de la couche adhésive et de la couche de PVDF. Ainsi on facilite leur manipulation pour les fixer sur l'objet en materiau thermodur.

**S'agissant de l'élastomère acrylique** on désigne ainsi les élastomères à base d'au moins un monomère choisi parmi l'acrylonitrile, les (meth)acrylate d'alkyle et les core shell (coeur écorce). S'agissant du copolymère coeur - écorce il se présente sous la forme de fines particules ayant un coeur en élastomère et au moins une écorce thermoplastique, la taille des particules est en général inférieure au µm et avantageusement comprise entre 50 et 300 nm. A titre d'exemple de coeur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (meth)acrylate d'alkyle. Une autre famille de coeur est constituée par les homopolymères d'un (meth)acrylate d'alkyle et les copolymères d'un (meth)acrylate d'alkyle avec au plus 30% en moles d'un monomère choisi parmi un autre (meth)acrylate d'alkyle et un monomère vinylique. Le (meth)acrylate d'alkyle est avantageusement l'acrylate de butyle. Le monomère vinylique peut être le styrène, un alkylstyrène, l'acrylonitrile, le butadiène ou l'isoprène. Le coeur du copolymère coeur écorce peut être réticulé en tout ou partie. Il suffit d'ajouter des monomères au moins difonctionnels au cours de la préparation du coeur, ces monomères peuvent être choisis parmi les esters poly(meth)acryliques de polyols tels que le di(meth)acrylate de butylène et le trimethylol propane trimethacrylate. D'autres monomères difonctionnels sont par exemple le divinylbenzène, le trivinylbenzène, l'acrylate de vinyle et le methacrylate de vinyle. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, un autre (meth)acrylate d'alkyle, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (meth)acrylique et le méthacrylate de glycidyle.

A titre d'exemple on peut citer des copolymères coeur - écorce ayant une écorce en polystyrène et des copolymères coeur- écorce ayant une écorce en PMMA. Il existe aussi des copolymères coeur - écorce ayant deux écorces , l'une en polystyrène et l'autre à l'exterieur en PMMA. Des exemples de copolymère ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704, US5773520.

Avantageusement le coeur représente, en poids, 70 à 90% du copolymère coeur écorce et l'écorce 30 à 10%.

A titre d'exemple de copolymère on peut citer celui constitué (i) de 75 à 80 parties d'un coeur comprenant en moles au moins 93% de butadiène, 5% de styrène et 0,5 à 1 % de divinylbenzène et (ii) de 25 à 20 parties de deux écorces essentiellement de même poids l'une intérieure en polystyrène et l'autre extérieure en PMMA.

A titre d'autre exemple on peut citer ceux ayant un coeur en poly(acrylate de butyle) ou en copolymère de l'acrylate de butyle et du butadiène et une écorce en PMMA.

Tous ces copolymères coeur écorce sont parfois appelés mou / dur à cause du coeur en élastomère.

Il existe aussi d'autres types de copolymères coeur écorce tels que les dur / mou / dur c'est à dire qu'ils ont dans cet ordre un coeur dur, une écorce molle et une écorce dure. Les parties dures peuvent être constituées des polymères de l'écorce des mou / dur précédents et la partie molle peut être constituée des polymères du coeur des mou / dur précédents. On peut citer par exemple ceux constitués dans cet ordre :
d'un coeur en copolymère du méthacrylate de méthyle et de l'acrylate d'éthyle,
d'une écorce en copolymère de l'acrylate de butyle et du styrène,
d'une écorce en copolymère du méthacrylate de méthyle et de l'acrylate d'éthyle.

Il existe encore d'autres types de copolymères coeur écorce tels que les dur (le coeur) / mou / mi dur. Par rapport aux précédents la difference vient de l'écorce extérieure "mi dur" qui est constituée de deux écorces : l'une intermédiaire et l'autre extérieure. L'écorce intermédiaire est un copolymère du méthacrylate de méthyle, du styrène et d'au moins un momère choisi parmi les acrylates d'alkyle, le butadiène et l'isoprène. L'écorce extérieure est un PMMA homopolymère ou copolymère. On peut citer par exemple ceux constitués dans cet ordre :
d'un coeur en copolymère du méthacrylate de méthyle et de l'acrylate d'éthyle,
d'une écorce en copolymère de l'acrylate de butyle et du styrène,
d'une écorce en copolymère du méthacrylate de méthyle, de l'acrylate de butyle et du styrène,
d'une écorce en copolymère du méthacrylate de méthyle et de l'acrylate d'éthyle.

Selon une forme particulière de l'invention la couche adhésive comprend en poids :
20 à 60 parties de PVDF,
10 à 60 parties de PMMA fonctionnalisé,
0 à 50 parties d'un élastomère acrylique,
0 à 4 parties d'un absorbeur UV,
le total faisant 100 parties,

Selon une autre forme particulière de l'invention la couche adhésive comprend en poids :
25 à 35 parties de PVDF,
45 à 55 parties de PMMA fonctionnalisé,
8 à 18 parties d'un élastomère acrylique,
2 à 3 parties d'un absorbeur UV,
le total faisant 100 parties.

Selon une autre forme particulière de l'invention la couche adhésive comprend en poids :
30 à 35 parties de PVDF,
50 à 55 parties de PMMA fonctionnalisé,
8 à 12 parties d'un élastomère acrylique,
2 à 3 parties d'un absorbeur UV,
le total faisant 100 parties.

Cette composition ne présente aucune exsudation de l'absorbeur UV.

En choisissant les proportions d'élastomère acrylique il faut tenir compte de celui qui peut être déjà contenu dans le PMMA. En effet il existe des qualités commerciales de PMMA dites "qualité choc" qui contiennent des modifiants choc acryliques le plus souvent de type coeur écorce. Ces modifiants choc acryliques peuvent aussi être présents dans le PMMA parce qu'ils ont été introduits au cours de sa polymérisation ou préparés simultanément au cours de sa polymérisation.

La composition de la couche adhésive peut être préparée par mélange du PVDF éventuel, du PMMA et de l'élastomère acrylique éventuel à l'état fondu dans lequel on ajoute l'absorbeur UV éventuel. On utilise avantageusement les dispositifs de mélange des thermoplastiques. On prépare de la même façon la couche de (A).

Le film constitué de la couche adhésive et de la couche (A) peut être fabriqué par tout moyen. Par exemple la couche (A) est fabriquée en cast, c'est à dire par extrusion dans une filière plate puis elle tombe sur des rouleaux refroidisseurs et ensuite la couche adhésive est couchée sur cette couche (A). On peut aussi coextruder en cast la couche adhésive et la couche (A) c'est à dire qu'on force la matière fondue des différentes couches à travers des filières plates disposées très proches les unes des autres, l'association des matières fondues forme le film multicouches qu'on refroidit par passage sur des rouleaux à température contrôlée. En ajustant les vitesses de rouleaux disposés dans le sens longitudinal et/ou de rouleaux disposés dans le sens transversal on peut provoquer un étirage dans le sens longitudinal et/ou dans le sens transversal. On peut aussi faire une coextrusion soufflage. Toutes ces techniques sont connues en elles mêmes.

L'épaisseur de la couche (A) est avantageusement comprise entre 2 et 50 µm et celle de la couche adhésive entre 10 et 100 µm.

**Selon une variante** la couche adhésive peut être constituée de 2 couches adjacentes, l'une comme celle décrite ci dessus et l'autre essentiellement constituée de PMMA fonctionnalisé et éventuellement d'un élastomère acrylique et disposée à l'opposé de la couche (A). C'est à dire qu'on a dans l'ordre: la couche essentiellement constituée de PMMA fonctionnalisé et éventuellement d'un élastomère acrylique, la couche adhésive précédente (PMMA fonctionnalisé, PVDF éventuel, élastomère acrylique éventuel et absorbeur UV éventuel) et la couche (A). Cette couche essentiellement constituée de PMMA fonctionnalisé et éventuellement d'un élastomère acrylique sert à renforcer le film couche adhésive / couche (A). Son épaisseur peut être de 10 à 200 µm.

**S'agissant de l'éventuelle couche pelable de protection** c'est une couche provisoire permettant de protéger la couche (A) pendant les étapes de manutention du film, de thermoformage éventuel et d'injection. Cette couche protectrice permet de maintenir ou de promouvoir un état de surface donné. Ainsi cette couche pourra être lisse ou rugueuse suivant l'état de surface désiré. Cette couche évite l'utilisation d'agent de démoulage susceptible de dégrader l'état de surface Cette couche présente par exemple une épaisseur comprise entre 10 et 150 µm et préférentiellement de 50 à 100 µm. Les matériaux utilisables pour réaliser cette couche peuvent être choisis parmi (i) les polyesters saturés tels que le PET, le PBT, les copolyesters et les polyetheresters, (ii) les polyoléfines homopolymères ou copolymères tels que les polyéthylènes et les polypropylènes et (iii) les polyamides. A titre d'exemple on peut citer le PET vendu sous la marque MYLAR ®par la société DuPont. Cette couche peut contenir différentes charges, comme le TiO₂, la silice, le kaolin, le carbonate de calcium, des paillettes d'aluminium et leurs dérivés. On peut aussi utiliser une couche pelable épaisse, par exemple plusieurs mm ou même jusqu'à 10 ou 20 mm. Dans ce cas elle n'est pas pelable au sens propre mais provisoire. C'est à dire qu'elle n'adhère pas au PVDF mais qu'elle sert de support.

**Selon une deuxième forme de l'invention** la couche (A) se présente sous forme de 2 couches :
l'une disposée contre la couche adhésive et comprenant comme constituants principaux 50 à 90 parties de PVDF pour respectivement 50 à 10 parties de PMMA,
l'autre (appelée aussi couche extérieure) comprenant comme constituants principaux 75 à 100 parties de PVDF pour respectivement 25 à 0 parties de PMMA.

Avantageusement la couche extérieure comprend comme constituants principaux 85 à 100 parties de PVDF pour respectivement 15 à 0 parties de PMMA et de préférence 90 à 100 parties de PVDF pour respectivement 10 à 0 parties de PMMA.

L'épaisseur de la couche adhésive est avantageusement comprise entre 10 et 100 µm et celle de chacune des autres couches est avantageusement comprise entre 2 et 50µm.

Ces films se fabriquent selon les mêmes techniques décrites plus haut pour les films constitués d'une couche adhésive et d'une couche de PVDF.

Le film multicouche de l'invention est utilisé pour recouvrir des objets en matériau thermodur (le substrat) par exemple soit par surmoulage soit encore par pressage à chaud sur le matériau thermodur. On utilise avantageusement la technique du surmoulage. On dispose le film dans un moule, la couche (A) étant disposée contre la paroi du moule, puis on injecte le précurseur du matériau thermodur dans le moule (cad du coté de la couche adhésive) et ensuite on provoque la réticulation pour obtenir un matériau thermodur revêtu de (A). On désigne par précurseur la composition complète avec les ingrédients nécessaires pour la réticulation et les charges éventuelles telles que par exemple les fibres de verre.

Si le moule est de forme simple l'injection du précurseur du matériau thermodur suffit à plaquer le film contre la paroi du moule, on utilise alors le film tel qu'on l'a obtenu. Si le moule est de forme plus compliquée, pour éviter des contraintes dans le film et pour assurer un bon contact du film avec les parois du moule il est nécessaire de preformer le film par therformage avant de le mettre dans le moule. On peut utiliser un autre moule de même forme et à l'aide d'une pièce ayant la même forme mais en positif on thermoforme le film, on peut aussi utiliser le même moule qui sert à l'injection du substrat. On peut aussi pour des conditions intermédiaires des précédentes ne pas faire de thermoformage mais mettre le film tel quel dans le moule et par de l'air comprimé du coté ou est injecté le précurseur du matériau thermodur plaquer le film sur la paroi du moule. On peut aussi faire le vide de l'autre coté du film pour le plaquer contre la paroi du moule. Puis on provoque la réticulation pour obtenir un matériau thermodur recouvert de (A).

On ne sortirait pas du cadre de l'invention si au lieu d'injecter le précurseur du matériau thermodur on déposait une feuille du précurseur du matériau thermodur sur la couche adhésive du film déjà dans le moule puis qu'on fermait le moule. Ensuite on provoque la réticulation. Cette feuille du précurseur du matériau thermodur provient d'un SMC c'est à dire du précurseur du matériau thermodur disposé entre 2 films support. On découpe le SMC aux dimensions du moule ou selon les dimensions requises, on pèle les films supports et on obtient la feuille constituée du précurseur du matériau thermodur. Le SMC est généralement composé d'une résine polymère réticulable, en particulier un polyester insaturé, de charges de renforcement telles que des fibres de verre, ainsi que de divers autres additifs en quantités peu importantes. Le SMC est ordinairement préparé en déposant des fibres sur une couche de résine polyester non saturé, elle-même supportée sur un film mobile, composé en général de polyéthylène ou de polyamide. Un autre film de même nature est ensuite déposé au-dessus du système résine/charge de renforcement pour former une masse composite en sandwich entre deux films. Le sandwich passe ensuite à travers une série de rouleaux de pétrissage et de compactage et est généralement enroulé sous forme de grands rouleaux. Il est alors stocké avant transformation ultérieure. Lors de la période de stockage, la résine polyester réticule partiellement, provoquant une augmentation de la viscosité du SMC, jusqu'à atteindre une consistance le rendant apte au moulage. Les utilisateurs de SMC, en général les mouleurs, coupent un morceau de dimensions appropriées à partir du rouleau, retirent par pelage le film de support et placent le SMC dans un moule chauffé pour la transformation et la cuisson complète simultanées. Ainsi, des masses composites en sandwich de SMC trouvent une application facile dans des modes opératoires de moulage par compression.

**L'invention concerne aussi une structure multicouche SMC** (abréviation de Sheet Moulding Compound ou composition de moulage en feuille) comprenant dans cet ordre:
un film support,
une composition réticulable (le précurseur du matériau thermodur),
une couche adhésive comprenant , en poids :
   0 à 60 parties de PVDF,
   10 à 100 parties de PMMA fonctionnalisé,
   0 à 50 parties d'un élastomère acrylique,
   0 à 4 parties d'un absorbeur UV,
   le total faisant 100 parties,
une couche (A) comprenant comme constituants principaux 0 à 100 parties de PVDF pour respectivement 100 à 0 parties de PMMA.

Toutes les détails des constituants de cette structure SMC ont déjà été décrits plus haut (sauf le film support) et sont valables pour cette structure SMC. Ceci concerne aussi la couche pelable éventuelle du coté de la couche (A) et le remplacement de la couche (A) par deux couches.

**Le film support** a trois propriétés principales. La première a trait à la perméabilité au styrène. Il est nécessaire que ce film support ait une perméabilité au styrène très faible afin d'éviter la perte de styrène monomère qui joue le rôle de diluant réactif dans le précurseur du matériau thermodur. Cette perte de styrène monomère est également préjudiciable pour la santé des individus lors des opérations de fabrication du SMC et de son stockage. La deuxième propriété concerne la facilité de pelage de ce film sur la structure polyester, afin qu'il ne subsiste pas de film résiduel sur la structure et d'éviter les risques de déchirure de ce film lors des opérations de fabrication et de transformation du SMC. Enfin, la reprise d'humidité et la perméabilité à l'eau de ces films support doivent être très faibles pour que la qualité de la résine thermodurcissable (par exemple le polyester, très sensible à l'eau, ne soit pas altérée lors des opérations de fabrication du SMC, du stockage ou de la transformation du SMC. Ce film support est en général en polyéthylene, en polyamide ou en alliage de polyamide, il peut être mono ou multicouche. L'art antérieur a déjà décrit de tels films, on peut citer par exemple les brevets EP 506515, EP 786319, EP 990515 et EP 997268. L'épaisseur du film support peut être comprise entre 10 et 100 µm.

Cette structure multicouche SMC peut être fabriquée par couchage du précurseur du matériau thermodur sur le film support et on vient appliquer le film constitué de la couche adhésive et de la couche (A) qu'on a fabriqué préalablement.

La structure SMC est découpée à la demande, on pèle le film support, on la dispose dans un moule puis on provoque la réticulation pour obtenir un objet en matériau thermodur recouvert d'un film de (A). Selon la forme de l'objet on peut commencer par un thermoformage ou ne faire qu'un thermoformage si il est suffisant pour obtenir le matériau thermodur recouvert de (A).

**Selon une deuxième forme de cette structure SMC** le film support peut être remplacé par une couche adhésive et un film de (A) c'est à dire qu'on a une structure symétrique dans laquelle la composition réticulable est au centre.

Comme dans la première forme de la structure SMC ci dessus une couche pelable de protection peut être disposée du coté de la couche (A) et la couche (A) peut se présenter sous forme de 2 couches.

Toutes les détails des constituants de cette structure SMC ont déjà été décrits plus haut et sont valables pour cette structure SMC. Ceci concerne aussi la couche pelable éventuelle du coté de la couche (A) et le remplacement de la couche (A) par deux couches.

La structure SMC est découpée à la demande, on la dispose dans un moule puis on provoque la réticulation pour obtenir un objet en matériau thermodur recouvert de chaque coté, ou en totalité selon sa forme, d'un film (A). Selon la forme de l'objet on peut commencer par un thermoformage ou ne faire qu'un thermoformage si il est suffisant pour obtenir le matériau thermodur recouvert de (A).

Les figures suivantes illustrent quelques aspects de l'invention.

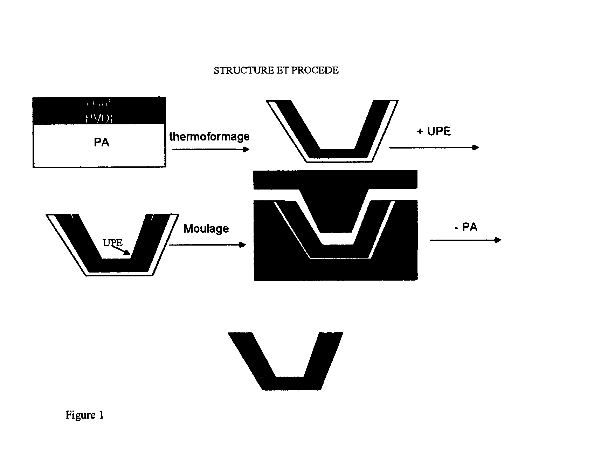

La figure 1 montre une couche pelable (couche support) en polyamide et la réalisation d'un objet après thermoformage du film. "liant" désigne la couche adhésive et "PVDF" désigne la couche (A) formée de PVDF.

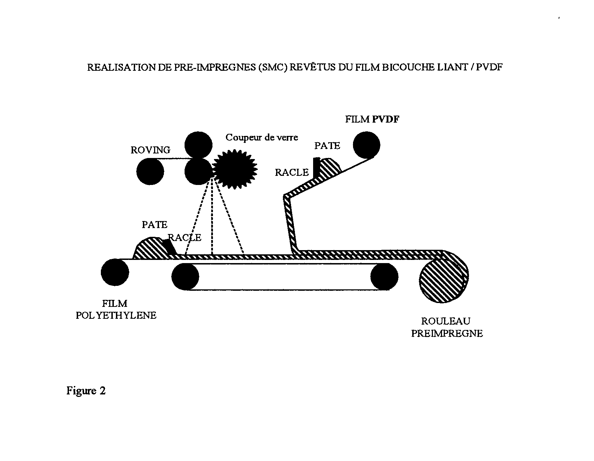

La figure 2 montre la fabrication d'une structure SMC dans laquelle le film support est en polyéthylène. "roving" désigne les fibres de verre et "film PVDF" désigne le film constitué de la couche adhésive et de la couche (A).

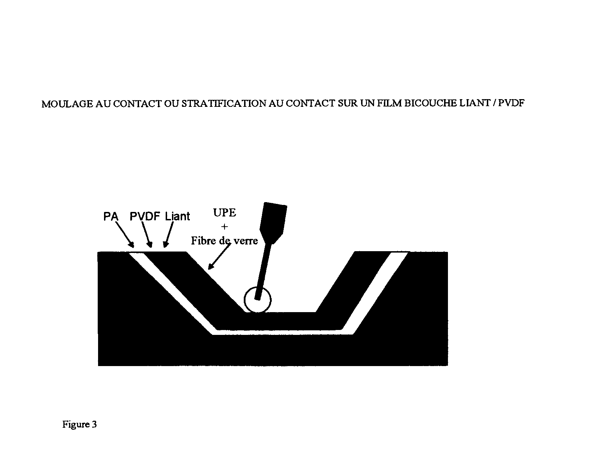

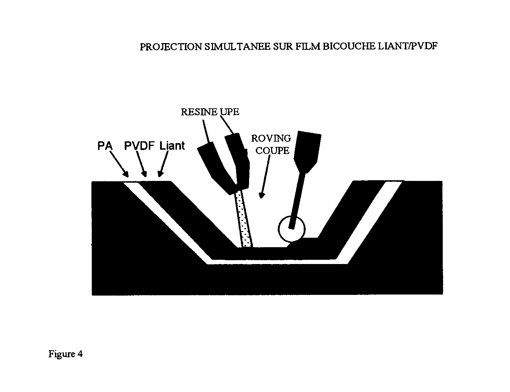

La figure 3 montre une structure tricouche constituée de la couche adhésive (liant), d'une couche (A) en PVDF parfaitement liée au liant, et d'une plaque épaisse de polyamide provisoire (couche provisoire), placée en fond de moule, un mat de verre est déposé sur ce tricouche, puis on asperge le mat par de la résine UPE ou VE et on provoque la pénétration de cette résine à l'aide de pinceaux ou de rouleau raides, cette opération sera renouvelée jusqu'à obtention de l'épaisseur désirée. Un gel-coat pourra être déposé entre le liant selon l'invention et la première couche de mat de verre et de résine. Le dépôt de verre et de résine pourra aussi être réalisé par projection simultanée à l'aide d'une machine à projeter qui permet de déposer sur le film bicouche liant selon l'invention/ couche (A) du roving coupé qui est imprégné de résine UPE dans le jet de pistolet pendant son transfert. (Voir figure 4). Après la réaction la plaque de polyamide peut être retirée et recyclée.

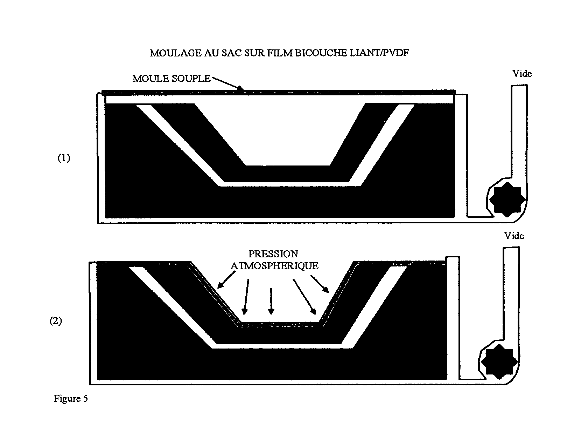

La figure 5 montre le tricouche constitué de la couche adhésive (le liant), d'une couche (A) en PVDF parfaitement liée au liant, et d'une plaque épaisse de polyamide provisoire. Il est déposé en fond de moule, la résine et le mat de verre sont déposés au contact du liant puis à l'aide d'un contre - moule souple, on utilise la pression atmosphérique par l'emploi de vide pour forcer la pénétration de la résine dans le mat de verre. Après la réaction la plaque de polyamide peut être retirée et recyclée.

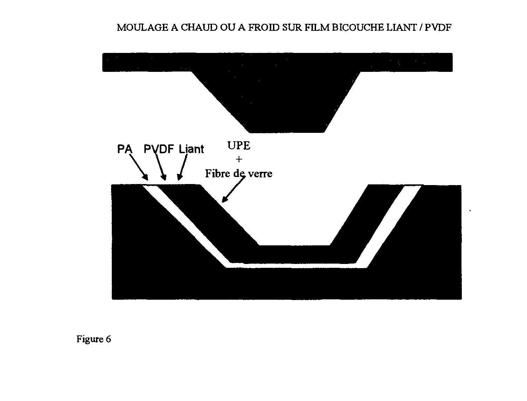

La figure 6 montre le tricouche constitué de la couche adhésive (le liant), d'une couche (A) en PVDF parfaitement liée au liant, et d'une plaque épaisse de polyamide provisoire. Il est déposé en fond de moule, le contre - moule souple du moulage au sac est remplacé par un moule rigide porté par une presse. Lors du pressage à froid, seules les calories apportées par l'exothermie de la réaction permettent de réaliser le collage vers 50 à 60°C. Lors du moulage à chaud le contre - moule et le moule peuvent être chauffés pour que la réaction puisse avoir lieu de 100 à 150°C. Après la réaction la plaque de polyamide peut être retirée et recyclée.

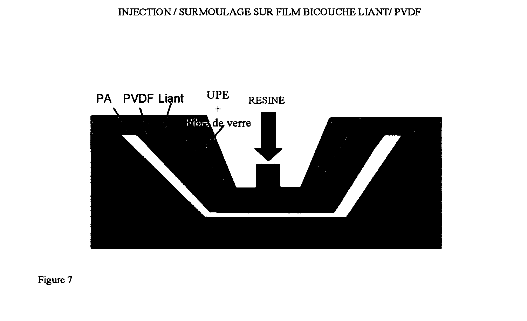

La figure 7 montre le tricouche constitué de la couche adhésive (le liant), d'une couche (A) en PVDF parfaitement liée au liant, et d'une plaque épaisse de polyamide provisoire. Il est disposé en fond de moule, le mat de verre est alors disposé à l'intérieur du moule en contact avec le liant selon l'invention. La résine liquide est alors injectée dans le renfort fibreux, soit sous pression, soit en mettant le moule sous vide. Après la réaction la plaque de polyamide peut être retirée et recyclée.

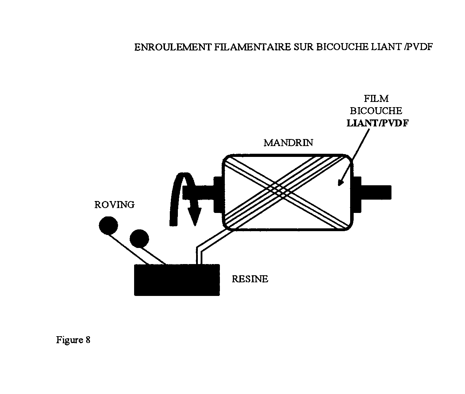

La figure 8 montre un bicouche constitué de la couche adhésive (liant) suivant l'invention et d'une couche (A) en PVDF parfaitement liée, déposé sur un mandrin sur lequel est enroulé suivant un programme de répartition parfaitement établi et calculé des fibres de verre imprégnées de résine. L'une des difficultés concernant cette technique de mise en oeuvre et de retirer le mandrin une fois la réaction faite. L'utilisation de matériaux fluorés en surface favorise énormément le démoulage.

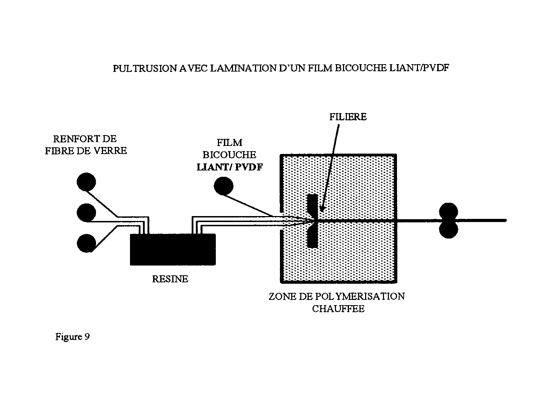

La figure 9 montre un bicouche constitué de la couche adhésive (le liant) et d'une couche (A) en PVDF parfaitement liée qui est déposé par lamination sur de la fibre de verre imprégnée de résine. Cette fibre imprégnée et revêtue du bicouche selon l'invention est forcée à travers une filière chauffée qui provoque la polymérisation de la résine et le collage avec le bicouche.

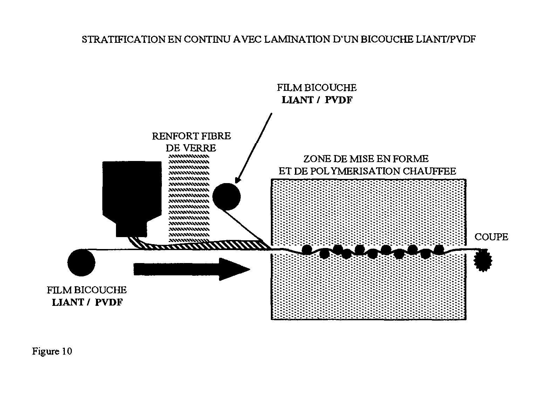

La figure 10 montre que du roving est déposé avec la résine entre deux structures bicouche (couche adhésive et couche (A) en PVDF) selon l'invention tractées ou entre une structure bicouche selon l'invention et une feuille de cellophane toutes deux tractées. Les feuilles présentent de chaque côté de la résine chargée servent de moule. La structure défile dans un four chauffé ou dès que la résine gélifie, est réalisée la mise en onde à l'aide de conformateurs.à la sortie, si une couche de cellophane a été utilisée, elle est retirée.

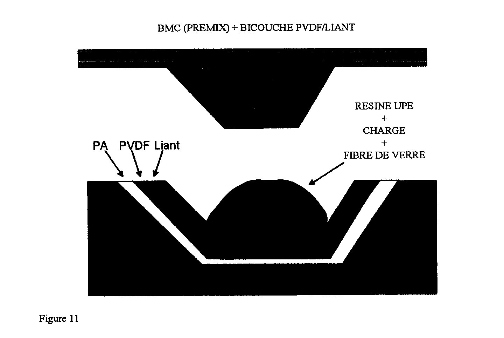

La figure 11 montre que le précurseur du matériau thermodur peut être placé en fond de moule. Puis la température est augmentée jusqu'à 120 - 150°C sous des pressions relativement élevées de 10 à 100 bars. La réalisation de pièce BMC consiste à épaissir la résine polyester liquide, contenant des peroxydes avec des charges à forte reprise en huile avec des fibres de verre à l'aide d'un mélangeur à pales en Z ou une boudineuse extrudeuse. La pâte obtenue est déposée sur un film bicouche selon l'invention (couche adhésive appelée aussi liant et couche (A) en PVDF), la pâte en contact avec la couche de liant au fond d'un moule. Le moulage est alors effectué à chaud.

### [Exemples]

On a utilisé les produits suivants:
**Kynar® 720** : PVDF homopolymère de la société ATOFINA et de MVI (Melt Volume Index ou indice de fluidité en volume à l'état fondu) 10 cm³/10 min (230°C , 5kg).
**OROGLAS® V 825 T** : PMMA de la société ATOGLAS de MVI 2.5 cm³/10 min (230°C , 3,8kg).
**OROGLAS® HT121** :PMMA (copolymère de MMA et d'acide méthacrylique) à 3,8% d'acide et de MFI 2 g/10 min (230°C , 3,8kg).
**EXL 3600** : Core-shell acrylique à base de méthacrylate de méthyle, de butadiène et de styrène de la société Rhom et Haas.

### EXEMPLE 1 SELON L'INVENTION

Composition de la couche adhésive : Elle comprend en poids 50% de Kynar 720, 15% d'OROGLAS V825 T et de 35% d'EXL 3600.

Composition de la couche de PVDF: 80% en poids de Kynar 720-20% en poids d'OROGLAS V825 T.

Composition de la résine : Résine typique SMC polyester sur base orthophtalique.

Au fond d'un moule plan chauffé à 140°C un film bicouche constitué d'une couche adhésive selon l'invention et d'une couche (A) de PVDF préalablement obtenu par les techniques habituelles de coextrusion de film est déposé. Un échantillon de résine SMC commerciale fournie par la société CRAY VALLEY est découpé pour recouvrir environ 70% de l'intérieur du moule. La structure est alors moulée pendant 5 minutes et refroidi 2 minutes. Après démoulage il est totalement impossible de peler le bicouche de la résine réticulée.

Une marque au feutre indélébile Staedtler® Lumocolor Permanent réalisé sur la face revêtue du film selon l'invention est facilement effacé alors que sur la face non revêtue, il est impossible d'effacer la marque.

Les odeurs de monomères résiduels ainsi que les odeurs des résidus de polymérisation sont inhibées du coté de la surface revêtue alors qu'elles sont encore présentent du côté non revêtu.

### EXEMPLE 2 (COMPARATIF) :

Au fond d'un moule plan chauffé à 140°C un film bicouche constitué d'une couche adhésive comme dans l'exemple 1 mais le PMMA n'est pas fonctionnalisé (c'est de l'OROGLAS V 825 T ) et d'une couche (A) de PVDF (identique à celle de l'exemple 1) préalablement obtenu par les techniques habituelles de coextrusion de film est déposé. Un échantillon de résine SMC commerciale fournie par la société CRAY VALLEY (identique à celle de l'ex 1) est découpé pour recouvrir environ 70% de l'intérieur du moule. La structure est alors moulée pendant 5 minutes et refroidi 2 minutes. Après démoulage il est possible de peler le bicouche fluoré de la résine réticulée.

### EXEMPLE 3 (COMPARATIF) :

Au fond d'un moule plan chauffé à 140°C un film monocouche de PVDF préalablement obtenu par les techniques habituelles d'extrusion film est déposé. Un échantillon de résine SMC commerciale fournie par la société CRAY VALLEY (identique à celle de l'exemple 1) est découpé pour recouvrir environ 70% de l'intérieur du moule. La structure est alors moulée pendant 5 minutes et refroidi 2 minutes. Après démoulage il est possible de peler le film monocouche PVDF de la résine réticulée.

## Revendications

1. Utilisation de films constitués d'une couche adhésive et d'une couche (A) pour revêtir des objets en matériau thermodur :
la couche adhésive comprenant , en poids :
0 à 60 parties de PVDF,
10 à 100 parties de PMMA fonctionnalisé,
0 à 50 parties d'un élastomère acrylique,
0 à 4 parties d'un absorbeur UV,
le total faisant 100 parties,
la couche (A) comprenant comme constituants principaux 0 à 100 parties de PVDF pour respectivement 100 à 0 parties de PMMA.

2. Utilisation selon la revendication 1 dans laquelle la proportion d'absorbeur UV est comprise entre 2 et 3 parties.

3. Utilisation selon la revendication 1 dans laquelle la couche adhésive comprend :
20 à 60 parties de PVDF,
10 à 60 parties de PMMA fonctionnalisé,
0 à 50 parties d'un élastomère acrylique,
0 à 4 parties d'un absorbeur UV,
le total faisant 100 parties,

4. Utilisation selon la revendication 1 dans laquelle la couche adhésive comprend :
25 à 35 parties de PVDF,
45 à 55 parties de PMMA fonctionnalisé,
8 à 18 parties d'un élastomère acrylique,
2 à 3 parties d'un absorbeur UV,
le total faisant 100 parties.

5. Utilisation selon la revendication 1 dans laquelle la couche adhésive comprend:
30 à 35 parties de PVDF,
50 à 55 parties de PMMA fonctionnalisé,
8 à 12 parties d'un élastomère acrylique,
2 à 3 parties d'un absorbeur UV,
le total faisant 100 parties.

6. Utilisation selon selon l'une quelconque des revendications précédentes dans laquelle l'élastomère acrylique est de type coeur écorce.

7. Utilisation selon l'une quelconque des revendications précédentes dans laquelle une couche pelable de protection est disposée du coté de la couche (A).

8. Utilisation selon l'une quelconque des revendications précédentes dans laquelle la couche (A) comprend comme constituants principaux 70 à 100 parties de PVDF pour respectivement 30 à 0 parties de PMMA.

9. Utilisation selon l'une quelconque des revendications précédentes dans laquelle l'épaisseur de la couche (A) est comprise entre 2 et 50 µm et celle de la couche adhésive entre 10 et 100 µm.

10. Utilisation selon l'une quelconque des revendications 1 à 6 dans laquelle la couche (A) se présente sous forme de 2 couches :
l'une disposée contre la couche adhésive et comprenant comme constituants principaux 50 à 90 parties de PVDF pour respectivement 50 à 10 parties de PMMA,
l'autre (appelée aussi couche extérieure) comprenant comme constituants principaux 75 à 100 parties de PVDF pour respectivement 25 à 0 parties de PMMA.

11. Utilisation selon la revendication 9 ou 10 dans laquelle la couche extérieure comprend comme constituants principaux 85 à 100 parties de PVDF pour respectivement 15 à 0 parties de PMMA.

12. Utilisation selon l'une quelconque des revendications 9 à 11 dans laquelle l'épaisseur de la couche adhésive est comprise entre 10 et 100 µm et celle de chacune des autres couches est comprise entre 2 et 50µm.

13. Structure multicouche SMC comprenant dans cet ordre:
un film support,
une composition réticulable (le précurseur du matériau thermodur),
une couche adhésive comprenant, en poids :
0 à 60 parties de PVDF,
10 à 100 parties de PMMA fonctionnalisé,
0 à 50 parties d'un élastomère acrylique,
0 à 4 parties d'un absorbeur UV,
le total faisant 100 parties,
une couche (A) comprenant comme constituants principaux 0 à 100 parties de PVDF pour respectivement 100 à 0 parties de PMMA.

14. Structure selon la revendication 13 dans laquelle le film support est remplacé par 2 couches :
une couche adhésive comprenant, en poids :
0 à 60 parties de PVDF,
10 à 100 parties de PMMA fonctionnalisé,
0 à 50 parties d'un élastomère acrylique,
0 à 4 parties d'un absorbeur UV,
le total faisant 100 parties,
une couche (A) comprenant comme constituants principaux 0 à 100 parties de PVDF pour respectivement 100 à 0 parties de PMMA.
la couche adhésive étant disposée contre la composition reticulable.

15. Utilisation selon l'une quelconque des revendications 1 à 12 dans laquelle une couche essentiellement constituée de PMMA fonctionnalisé et éventuellement d'un élastomère acrylique est disposé contre la couche adhésive.
